# EUROPEAN PATENT SPECIFICATION

(11) **EP 2 675 979 B1**
(45) Date of publication and mention of the grant of the patent: **23.09.2015**
(21) Application number: 12703146.6
(22) Date of filing: 06.02.2012
(51) Int. Cl.: E06B 3/67, C03C 17/34, C03C 17/36

(54) **COATED GLAZING**
GLASIERUNGSBESCHICHTUNG
VITRAGE À REVÊTEMENT

(30) Priority: 17.02.2011 GB 201102735
(43) Date of publication of application: 25.12.2013
(73) Proprietor: Pilkington Group Limited, St. Helens Merseyside WA10 3TT (GB)
(72) Inventor: NÖTHE, Axel, 44575 Castrop-Rauxel (DE); PAUL, Thomas, 44625 Herne (DE)
(74) Representative: Marsh, Andrew James
(86) International application number: PCT/GB2012/050253
(87) International publication number: WO 2012/110782

(56) References cited:
- WO-A1-2009/106864
- WO-A1-2010/043828
- US-A1- 2007 248 756

## Description

The present invention relates to a multiple glazing unit that combines low reflectance and thermal insulation and/or solar control properties.

A glass pane may be provided with a coating to decrease its emissivity ("low-e coating") to achieve thermal insulation properties by reflecting the infrared radiation emitted by for instance the interior of a building, and/or to reduce its solar energy transmittance ("solar control coating") to shield interior rooms against the entry of excessive amounts of solar energy (heat). Such coatings are generally layer systems with at least one transparent silver layer that follow the structure: glass/lower antireflection layer/silver layer/outer antireflection layer. In layer systems of this type, the silver layer serves mainly as an IR reflection layer, whilst the anti-reflection ("AR") layers may be employed, through suitable selection of material and thickness, to influence the transmission and reflection properties in the visible region of the spectrum, emissivity and solar energy transmittance, according to application.

Reflections detrimentally affect the view through both sides of windows. This problem is particularly significant for applications where the clear view through windows is crucial to their function such as with retail storefronts, showrooms and in other circumstances where it is necessary or advantageous to allow people to see into and out of, for example, a building or a room.

In order to alleviate this problem, shop windows are often single glazings, but such an arrangement can result in very bad thermal insulation properties. Other solutions involve double glazing systems with a dielectric AR coating on all four major surfaces of the panes (positions 1 to 4 of the glazing, where position 1 is a major surface of a first pane that contacts an external environment, position 2 is an opposing major surface of the first pane that contacts a gap between the first pane and a second pane, position 3 is a major surface of the second pane that contacts said gap, and position 4 is an opposing major surface of the second pane that contacts an internal environment). However, such glazings do not exhibit the desired low emissivity and therefore thermal insulation properties are poor. Furthermore, such glazings are very expensive to manufacture.

WO 2010/043828 describes a triple glazing with AR coatings on both major surfaces of the middle pane (positions 3 and 4) and low-e/solar control coatings on both inner major surfaces of the outer panes (positions 2 and 5). Such a triple glazing is purported to exhibit similar light transmittance properties to some double glazings, but with improved thermal insulation characteristics. However, the glazing of WO 2010/043828 does not exhibit low visible light reflectance, with values ranging from 9 to 15% in the examples.

EP 1007756 describes thermal insulation double glazing panes utilising a low-e coated pane and an uncoated pane separated by an argon gas filled interspace. The low-e coating is located at position 2 (example 6) or position 3 (example 5). Whilst the coated panes achieve low emissivity, it is apparent from Figures 3 and 4 that the reflectivity of a coated single glass pane in the visible spectrum of 390-750 nm is around 5%. The coated single pane of, for instance, example 5 has a light transmission factor of 84.8% which therefore leads to a total reflectance of the double glazing of around 12%.

EP 829610 describes an insulated glazing with three sheets of glass separated by two intermediate spaces. At least two of the sheets are provided with a low-e coating and all three sheets have a low content of oxides, such as iron oxides, that are able to absorb wavelengths in the solar radiation range. However, no mention is made of AR coatings or characteristics.

WO 2009/106864 A1 describes a coated glazing comprising a pane of glass having an innermost surface and an outermost surface, and a coating layer (e.g. a titania coating and an underlying fluorine-doped tin oxide coating) on the outermost surface of the pane. The glazing has an emissivity of 0.7 or less and its outermost coated surface is both hydrophilic and photoactive (after any necessary initial activation period) with a water droplet contact angle of 30 DEG or less, the glazing thereby having the capability of reducing or preventing the tendency for condensation to form on its outermost surface and the facility for maintaining the water droplet contact angle at or below 30 DEG. Also disclosed is a method of reducing or preventing the tendency for condensation to form on the outermost surface of a glazing.

US 2007/248756 A1 describes a sheet-like pane bearing a low-maintenance coating on one surface and a low-emissivity coating on the opposite surface, wherein one of the low-maintenance coating and the low-emissivity coating has a single surface reflectivity of less than 3 times, and more than one-third, that of the other coating.
The present invention aims to solve the problems of prior art glazings by providing a multiple glazing unit that combines low visible light reflectance with excellent thermal insulation and/or solar control properties.

According to a first aspect of the present invention there is provided an insulated multiple glazing unit comprising at least two coated glass panes separated by at least one gap, wherein the at least two coated glass panes each comprise a low-emissivity and/or solar control coating on a first major surface of the pane and an anti-reflection coating on a second major surface of the pane,
wherein two of the coated glass panes are outer panes arranged such that their low-emissivity and/or solar control coatings face each other and their anti-reflection coatings face away from each other,

wherein each of said low-emissivity and/or solar control coatings is such that, if said coating coats a major surface of an otherwise uncoated clear glass pane, said pane exhibits a visible light reflectance, both when viewed normal to said coated major surface and normal to an opposing uncoated major surface, of less than 6%, and
wherein the unit exhibits a visible light reflectance, when viewed normal to each of said anti-reflection coatings of the two outer panes, of less than 6%.

The glazing unit of the present invention exhibits low emissivity and/or low solar energy transmittance and therefore provides excellent thermal insulation and/or solar control properties. Surprisingly it has been found that a glazing unit with these properties can also exhibit extremely low visible light reflectance characteristics. Normal low-e and/or solar control windows exhibit a visible light reflectance of no less than around 12% when viewed from both sides, e.g. when observing positions 1 and 4 of a double glazing unit. In contrast, the unit of the present invention demonstrates very low visible light reflectance when viewed from both sides of the unit. The low-e and/or solar control coatings are optimised for particularly low visible light reflectance primarily by appropriate adjustment of the thicknesses of the silver-based and dielectric layers. Another significant benefit of the unit of the present invention is that the low-e and/or solar control coating is much easier and cheaper to produce in comparison to conventional AR coatings.

In the context of the present invention, all optical properties were measured in accordance with the EN 410 standard, and all emissivity and U-values were measured in accordance with EN 12898 and EN673.

In normal low-e and/or solar control coatings the AR layers serve the purpose of reducing the high visible light reflectance of glass panes coated with a silver-based layer, typically to values corresponding to the reflectance of uncoated glass (i.e. about 8%). However, as the primary optimization target for normal low-e coatings is that the emissivity should be as low as possible the visible light reflectance remains far above what might be theoretically achievable when aiming at a minimized reflectance.

For an inventive reflectance-reduced low-e and/or solar control coating the thickness of the silver-based layer is modified (i.e. reduced, thereby increasing its sheet resistance) as compared to standard low-e and/or solar control coatings to achieve - in combination with an optimized and adapted thickness of the AR layers - a visible light reflectance that is reduced to a minimum, with the additional preferred proviso that the visible light reflectance has essentially the same low level, when seen both from the coated and the uncoated surface of the coated glass pane (before applying the AR coating to the uncoated surface). The reason for this proviso is that inventive coated glass panes are used in both orientations when implemented in the inventive insulated glazing unit.

As a result of the visible light reflectance minimization - and the preferred equalization - mentioned before, the emissivity is slightly increased, e.g. from about 3 % for a standard low-e coated pane to about 4%. Despite such slight emissivity increase the U-value of the inventive insulated multiple glazing unit may still achieve a value as low as 1.1 W/(m²K) or even less because at least two low-e coatings are used rather than one as in a standard unit.

In the context of the present invention, where a layer is said to be "based on" a particular material or materials, this means that the layer predominantly consists of said material or materials, which means typically that it comprises at least about 50 wt.% of said material or materials.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

Preferably each of said low-emissivity and/or solar control coatings is such that, if said coating coats a major surface of an otherwise uncoated clear glass pane, said pane exhibits a visible light reflectance, both when viewed normal to said coated major surface and normal to an opposing uncoated major surface, of less than 5%, more preferably less than 4%, even more preferably less than 3%, even more preferably less than 2.5%, even more preferably less than 2%, even more preferably less than 1%, most preferably less than 0.6%.

Preferably each of said low-emissivity and/or solar control coatings is such that, if said coating coats a major surface of an otherwise uncoated clear glass pane, the visible light reflectance that said pane exhibits does not differ by more than 0.5% when viewed normal to said coated major surface and normal to an opposing uncoated major surface, more preferably said visible light reflectance does not differ by more than 0.4%, even more preferably said visible light reflectance does not differ by more than 0.3%.

Preferably the unit exhibits a visible light reflectance, when viewed normal to each of said anti-reflection coatings of the two outer panes, of less than 5%, more preferably less than 4%, even more preferably less than 3.5%, most preferably less than 3%.

The unit may exhibit a U-value of less than 1.5 W/(m²K), preferably less than 1.4 W/(m²K), more preferably less than 1.3 W/(m²K), even more preferably less than 1.2 W/(m²K). The U-value is the overall heat transfer coefficient and describes how well a building element conducts heat, i.e. as the U-value decreases, so does the rate of heat transferred through the building element. Therefore the lower the U-value of a building element, the better the insulating quality of said building element.

Preferably the at least one gap is sealed. Preferably the at least one gap is at least partially filled with gas, such as argon and/or nitrogen. Alternatively, the at least one gap may contain a vacuum. The at least one gap may have a thickness of at least 6 mm, preferably at least 10 mm, more preferably at least 12 mm, even more preferably at least 14 mm; but at most 30 mm, preferably at most 25 mm, more preferably at most 20 mm, even more preferably at most 18 mm. Too little space between the panes of glass can result in conductive heat loss between the panes (the inside surface of one pane cools the surface of the other pane) while too wide a gap can result in convection current losses (gas begins to circulate because of temperature differences and transfers heat between the panes).

Each of the at least two coated glass panes may have a glass thickness of at least 2 mm, preferably at least 4 mm, more preferably at least 5 mm; but at most 20 mm, preferably at most 16 mm, more preferably at most 12 mm. Each of the at least two coated glass panes may in some embodiments have a glass thickness of at least 4 mm, preferably at least 5 mm, more preferably at least 5.5 mm; but at most 8 mm, preferably at most 7 mm, more preferably at most 6.5 mm. In some alternative embodiments each of the at least two coated glass panes may have a glass thickness of at least 10 mm, preferably at least 11 mm, more preferably at least 11.5 mm; but at most 14 mm, preferably at most 13 mm, more preferably at most 12.5 mm.

In a preferred embodiment the unit comprises two coated glass panes separated by one gap. In this embodiment the coated panes are therefore arranged such that the low-emissivity and/or solar control coatings face each other (i.e. these coatings are located at positions 2 and 3) and the anti-reflection coatings face away from each other (i.e. these coatings are located at positions 1 and 4).

In some embodiments the unit may further comprise at least one uncoated and/or at least one coated additional pane located between said two coated panes. Said at least one additional pane may comprise at least one AR and/or at least one low-e and/or solar control coating with reduced reflectivity, or it may comprise a low-e and/or solar control coating with reduced reflectivity on each of its major surfaces.

In a preferred embodiment the unit comprises three coated glass panes separated by two gaps, wherein the three coated glass panes each comprise a low-emissivity and/or solar control coating on a first major surface of the pane and an anti-reflection coating on a second major surface of the pane, wherein each of said low-emissivity and/or solar control coatings is such that, if said coating coats a major surface of an otherwise uncoated clear glass pane, said pane exhibits a visible light reflectance, both when viewed normal to said coated major surface and normal to an opposing uncoated major surface, of less than 6%. Therefore in this embodiment the coated panes are arranged such that all of the low-emissivity and/or solar control coatings face a gap (i.e. positions 2 and 5 and 3 or 4), two of the anti-reflection coatings face away from each other (i.e. positions 1 and 6) and one of the anti-reflection coatings faces a gap (i.e. position 3 or 4). In other words, the orientation of an intervening coated pane in accordance with the at least two coated glass panes of the first aspect (or indeed of any such coated panes located between two outer coated panes) is not important for the purposes of this invention.

The inventive low-emissivity and/or solar control coating may comprise at least one reflective metal-based layer which is sandwiched between two layers of a dielectric material. Coatings comprising one or two metal-based layers are preferred. The reflective metal-based layer may be based on silver or a silver alloy layer which is from 5 to 20 nm thick. The dielectric material may be based on a metal oxide such as zinc oxide or a nitride such as silicon and/or aluminium nitride. The dielectric layer may be from 10 to 80 nm thick. A sacrificial layer of a metal such as titanium or a metal suboxide may be deposited on top of the silver layer or layers.

At least one of the low-emissivity and/or solar control coatings may comprise at least the following layers in sequence:
- a lower anti-reflection layer, comprising in sequence from the first major surface of the pane
   o a base dielectric layer, and
   o a growth layer;
- a silver-based functional layer; and
- an upper anti-reflection layer, comprising in sequence from the silver-based functional layer,
   o a barrier layer, and
   o a top dielectric layer.

The base dielectric layer may comprise TiO₂. The base dielectric layer may have a thickness of at least 15 nm, preferably at least 20 nm, more preferably at least 22.5 nm, even more preferably at least 24 nm; but at most 50 nm, preferably at most 40 nm, more preferably at most 35 nm, even more preferably at most 30 nm. These preferred thicknesses enable further improvement in AR characteristics.

The silver-based functional layer may consist essentially of silver without any additive, as is normally the case in the area of low-e and/or solar control coatings. It is, however, within the scope of the invention to modify the properties of the silver-based functional layer by adding doping agents, alloy additives or the like or even adding very thin metal or metal compound layers, as long as the properties of the silver-based functional layer necessary for its function as a highly light-transmitting and low light-absorbent IR-reflective layer is not substantially impaired thereby.

The thickness of a silver-based functional layer is dominated by its technical purpose. For the low-e and/or solar control purposes of the present invention the silver-based functional layer may have a thickness of at least 6 nm, preferably at least 8 nm, more preferably at least 9 nm, even more preferably at least 10 nm; but at most 15 nm, preferably at most 13 nm, more preferably at most 12 nm, even more preferably at most 11 nm.

Preferably the growth layer of the lower anti-reflection layer is based on an oxide of Zn and is preferably in direct contact with the silver-based functional layer. Its presence provides favourable growth conditions for the subsequently deposited silver-based functional layer. Preferably the layers between the glass pane and the silver-based functional layer consist of the two layers of the lower anti-reflection layer as set out above.

While the invention is primarily directed to coated panes with only one silver-based functional layer it is within the scope of the invention to apply the inventive concept to coated panes comprising two or even more silver-based functional layers. By providing more than one silver-based functional layer, all functional layers are spaced by intervening dielectric layers (= "central anti-reflection layers") to form a Fabry-Perot interference filter, whereby the optical properties of the low-e and/or solar control coating may be further optimized for the respective application, particularly for achieving the low visible light reflectance properties aimed at herein.

The top dielectric layer may be in direct contact with the barrier layer. The top dielectric layer may have a thickness of at least 20 nm, preferably at least 30 nm, more preferably at least 34 nm, even more preferably at least 35 nm; but at most 60 nm, preferably at most 55, more preferably at most 50 nm, even more preferably at most 45 nm. Such preferred thicknesses provide improved AR properties.

Preferably the layers in sequence from the silver-based functional layer to the upper anti-reflection layer consist of the silver-based functional layer and the two layers of the upper anti-reflection layer as set out above.

In some preferred embodiments the low-emissivity and/or solar control coating may consist of the five layers in sequence as set out above.

Alternatively or additionally, at least one of the low-emissivity and/or solar control coatings may comprise at least the following layers in sequence:
- a lower anti-reflection layer, comprising in sequence from the first major surface of the pane
   o a base dielectric layer, and
   o a growth layer;
- a lower silver-based functional layer;
- a central anti-reflection layer, comprising in sequence from the lower silver-based functional layer
   o a barrier layer, and
   o a central dielectric layer;
- an upper silver-based functional layer; and
- an upper anti-reflection layer, comprising in sequence from the upper silver-based functional layer,
   o a barrier layer, and
   o a top dielectric layer.

The AR coating may be a class A or S AR coating according to the EN 1096 standard. In some embodiments the AR coating may comprise, in sequence from the second major surface of the glass substrate, a layer based on an oxide of silicon, a layer based on an oxide of tin optionally doped with fluorine, and a layer based on an oxide of silicon.

According to a further aspect of the present invention there is provided a building incorporating an insulated multiple glazing unit according to the first aspect.

According to another aspect of the present invention there is provided the use of an insulated multiple glazing unit according to the first aspect in retail storefronts and/or showrooms. The use of the unit in such applications is desirable because a clear view through the windows of these structures is crucial to their function.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

Embodiments of the present invention will now be described herein, by way of example only, with reference to the accompanying drawing in which:

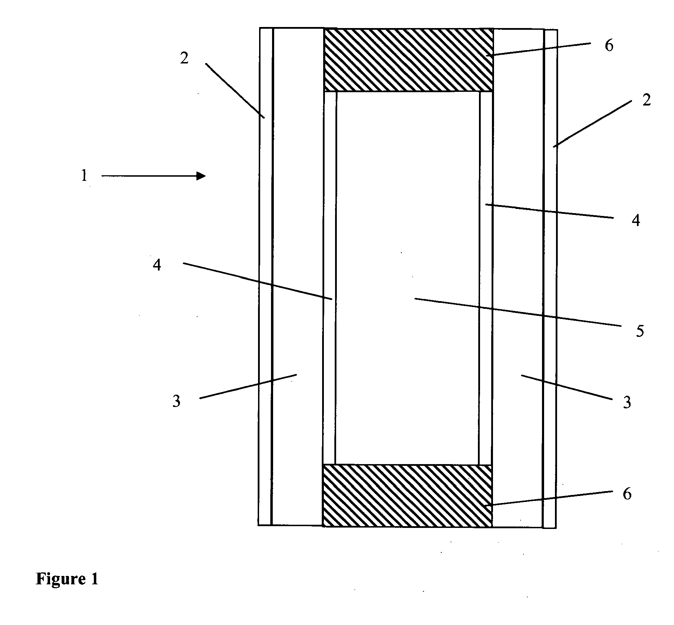

**Figure 1** shows a cross sectional view of a glazing unit in accordance with the present invention.

Figure 1 illustrates a double glazing unit 1 of the present invention with AR coatings 2 on the external major surfaces of glass panes 3 that face away from each other. Reflectance-reduced low-emissivity and/or solar control coatings 4 coat the internal major surfaces of the glass panes 3. Said coatings 4 face argon gas filled gap 5 which is sealed with a spacer 6. Spacer 6 seals gap 5 by contacting the internal major surfaces of both glass panes 3 around the entire periphery of said panes 3. Glass panes 3 may be monolithic or laminated glass.

### Example 1 (Comparative)

A magnetron cathode sputtering system was used initially to apply onto a 6 mm thick float glass pane with the dimensions 40 x 40 cm², a 22.9 nm thick titanium oxide layer with the aid of a medium-frequency double-cathode. For this purpose, an Ar/N₂/O₂ gas mixture in the proportion of 6: 20: 3 was introduced into the chamber, so that a pressure of 2.6x10⁻³ mbar was obtained. The cathode output was 8.4 kW, the alternating frequency of the voltage was 25 kHz. The rate of coating for the titanium oxide layer was 50 nm/min. Subsequently, a 5 nm thick zinc oxide layer was applied onto the titanium oxide layer by means of a DC cathode. For this purpose, an Ar/O₂ gas mixture was introduced into the chamber, so that a pressure of 2.4x10⁻³ mbar was obtained. The output of the cathode was 4.1 kW. Subsequently, an 11.3 nm thick silver layer was applied. For this purpose, the argon was introduced into the chamber, so that a pressure of 1.4x10⁻³ mbar was obtained. The output of the cathode was 1.3 kW. Onto the silver layer was first applied a 3 nm thick In (90) Sn (10) layer as protective layer for the subsequent reactive application of the outer antireflection layer. For this purpose, an Ar/O₂ gas mixture was introduced into the chamber, so that a pressure of 2.4x10⁻³ was obtained. The output of the cathode was 0.7 kW. As principal layer of the outer antireflection layer, a 44.8 nm thick tin oxide layer was finally applied. For this purpose, an Ar/O₂ gas mixture was introduced into the chamber, so that a pressure of 4.4x10⁻³ mbar was obtained. The output of the cathode was 4.7 kW.

The resulting coated glass pane has the following properties measured in accordance with EN 410 and EN 673:
Coated glass pane:

| | |
|---|---|
| Light transmittance: | 88.4% |
| Light reflectance from Position 1: | 5.8% |
| Light reflectance from Position 2: | 7.6% |
| Emissivity: | 0.03 |

The coated glass pane was assembled with a second 6 mm thick uncoated float glass pane, with the coated side facing the interspace, at position 3, to form a thermal insulation double-glazing unit with an interspace distance of 16 mm and a 90% argon gas filling. The double-glazing unit had a light transmittance factor of 80 % and a U-value of 1.1 W/m²K.

The properties of this double glazing unit comprising two panes of float glass (6mm thick) separated by a 16mm thick 90% Ar filled interspace, with the low-e coating on position 3, were measured in accordance with EN 410 and EN 673:
Double glazing unit:

| | |
|---|---|
| Light transmittance: | 80% |
| Light reflectance to the outside: | 13% |
| Light reflectance to the inside: | 14% |
| U-value: | 1.1 W/(m²K) |
| SHGC: | 0.63 |

This typical low-e window exhibits a significant amount of undesirable light reflectance to both the outside and the inside.

### Example 2

A float glass process was used to produce a clear float glass ribbon having a thickness of 6 mm. The glass ribbon was travelling at a line speed of about 11.0 m/min. A conventional online coating apparatus was utilized in the float bath to pyrolytically apply an 18.5 nm coating of silicon oxide onto the surface of the float glass ribbon. The coating was applied by directing 12 standard liters per minute (slm) of ethylene, 6 slm of oxygen, and 2 slm of silane SiH₄ in 535 slm of a nitrogen carrier gas.

A 102.5 nm coating of fluorine doped tin oxide was applied onto the silicon oxide coating. Approximately 4.08 kg/hr of dimethyltin dichloride, 270 slm of oxygen, 6 slm of hydrofluoric acid, and 150 cc per minute of water were provided in a 200 slm helium carrier gas.

A 77.7 nm coating of silicon oxide was applied over the fluorine doped tin oxide film. The outer layer was applied by directing a precursor gas mixture, in each of two conventional coaters, containing 42 slm of ethylene, 21 slm of oxygen, and 7 slm of silane SiH₄ in a 535 slm of a nitrogen carrier gas.

The back surface of the resulting AR coated glass pane was polished with CeO₂ to eliminate back surface tin from the float bath. The coated glass pane exhibited a 92.3% visible light transmittance with a neutral colour in accordance with CIELAB Illuminant C 2 degree observer standard having a* value of -1.9 and b* value of 2.4. The pane had a visible light reflectance of 4.8 and a neutral colour as designated by an a* value of 5.6 and b* value of-12.0.

A low-emissivity and solar control coating optimised for low visible light reflectance was deposited on the uncoated major surface of the glass pane in accordance with the approach set out in Example 1 to provide the following layers in sequence from the glass surface: 26.5 nm TiO₂ / 5 nm ZnO:Al / 10.4 nm Ag / 3 nm InSnOₓ / 37 nm SnO₂

The resulting coated glass pane has an AR coating at Position 1 and a reflectance-reduced low-emissivity and solar control coating at Position 2. This pane has the following properties measured in accordance with EN 410 and EN 673:
Coated glass pane:

| | |
|---|---|
| Light transmittance: | 88.1% |
| Light reflectance from Position 1: | 1.2% |
| Light reflectance from Position 2: | 1.7% |
| Emissivity: | 0.04 |

Two of these coated glass panes were incorporated into an insulated glazing unit with the following arrangement:

| | |
|---|---|
| Position 1: | SiO₂/SnO₂:F/SiO₂ coating |
| Position 2: | TiO₂ / ZnO:Al / Ag / InSnOₓ / SnO₂ coating |
| Position 3: | TiO₂ / ZnO:Al / Ag / InSnOₓ / SnO₂ coating |
| Position 4: | SiO₂/SnO₂:F/SiO₂ coating |

Therefore the two reflectance-reduced low-emissivity and solar control coatings both face each other. The gap between the panes is 16mm wide and filled with 90% Ar. The resulting insulated glazing unit has the following properties measured in accordance with EN 410 and EN 673:
Double glazing unit:

| | |
|---|---|
| Light transmittance: | 77.6% |
| Light reflectance to the outside: | 2.6% |
| Light reflectance to the inside: | 2.6% |
| U-value (overall heat transfer coefficient): | 1.1 W/(m²K) |
| SHGC (solar heat gain coefficient): | 0.55 |

Accordingly, this example of a glazing unit of the present invention exhibits a far lower light reflectance to both the outside and the inside in comparison with a typical low-e glazing unit. Such a low reflectance enables the glazing to be readily utilised in retail storefronts, showrooms etc. without unwanted reflections obscuring the view through the glazing.

### Example 3

A major surface of an uncoated glass pane was coated with an AR coating as set out in example 2.

A low-emissivity and solar control coating optimised for low visible light reflectance was deposited on a major surface of the glass pane in accordance with the approach set out in Example 1, repeating steps as necessary, to provide the following layers in sequence from the glass surface:
18nm TiO₂ / 5nm ZnO:Al / 10nm Ag / 3nm InSnOₓ / 73nm SnO₂ / 12nm Ag / 3nm InSnOₓ / 32nm SnO₂

The resulting coated glass pane has an AR coating at Position 1 and a reflectance-reduced low-emissivity and solar control coating at Position 2. This pane has the following properties measured in accordance with EN 410 and EN 673:
Coated glass pane:

| | |
|---|---|
| Light transmittance: | 80.1% |
| Light reflectance from Position 1: | 2.0% |
| Light reflectance from Position 2: | 2.1% |
| Emissivity: | 0.02 |

This coated glass pane was incorporated into an insulated glazing unit alongside the coated glass pane described in example 2 in the following arrangement:
Position 1: SiO₂/ SnO₂:F / SiO₂ coating
Position 2: TiO₂ / ZnO:Al / Ag / InSnOₓ / SnO₂ / Ag / InSnOₓ / SnO₂ coating
Position 3: TiO₂ / ZnO:Al / Ag / InSnOx / SnO₂ coating
Position 4: SiO₂ / SnO₂:F / SiO₂ coating

Therefore the reflectance-reduced low-emissivity and solar control coatings both face each other. The gap between the panes is 16mm wide and filled with 90% Ar. The resulting insulated glazing unit has the following properties measured in accordance with EN 410 and EN 673:
Double glazing unit:

| | |
|---|---|
| Light transmittance: | 70.6% |
| Light reflectance to the outside: | 2.8% |
| Light reflectance to the inside: | 3.4% |
| U-value: | 1.1 W/(m²K) |
| SHGC VALUE | 0.40 |

This example illustrates another glazing unit of the present invention that demonstrates a far lower light reflectance to both the outside and the inside in comparison with a typical low-e glazing unit.

## Claims

1. An insulated multiple glazing unit (1) comprising at least two coated glass panes (3) separated by at least one gap (5),
wherein the at least two coated glass panes (3) each comprise a low-emissivity and/or solar control coating (4) on a first major surface of the pane and an anti-reflection coating (2) on a second major surface of the pane,
wherein two of the coated glass panes (3) are outer panes arranged such that their low-emissivity and/or solar control coatings (4) face each other and their anti-reflection coatings (2) face away from each other,
wherein each of said low-emissivity and/or solar control coatings (4) is such that, if said coating (4) coats a major surface of an otherwise uncoated clear glass pane, said pane exhibits a visible light reflectance, both when viewed normal to said coated major surface and normal to an opposing uncoated major surface, of less than 6%, and
wherein the unit (1) exhibits a visible light reflectance, when viewed normal to each of said anti-reflection coatings (2) of the two outer panes, of less than 6%.

2. The unit (1) according to claim 1, wherein each of said low-emissivity and/or solar control coatings (4) is such that, if said coating (4) coats a major surface of an otherwise uncoated clear glass pane, said pane exhibits a visible light reflectance, both when viewed normal to said coated major surface and normal to an opposing uncoated major surface, of less than 5%.

3. The unit (1) according to claim 1 or claim 2, wherein each of said low-emissivity and/or solar control coatings (4) is such that, if said coating (4) coats a major surface of an otherwise uncoated clear glass pane, said pane exhibits a visible light reflectance, both when viewed normal to said coated major surface and normal to an opposing uncoated major surface, of less than 3%.

4. The unit (1) according to any preceding claim, wherein each of said low-emissivity and/or solar control coatings (4) is such that, if said coating (4) coats a major surface of an otherwise uncoated clear glass pane, the visible light reflectance that said pane exhibits does not differ by more than 0.5% when viewed normal to said coated major surface and normal to an opposing uncoated major surface.

5. The unit (1) according to any preceding claim, wherein the unit (1) exhibits a visible light reflectance, when viewed normal to each of said anti-reflection coatings (2) of the two outer panes (3), of less than 4%.

6. The unit (1) according to any preceding claim, wherein the unit (1) exhibits a visible light reflectance, when viewed normal to each of said anti-reflection coatings (2) of the two outer panes (3), of less than 3.5%.

7. The unit (1) according to any preceding claim, wherein the unit (1) exhibits a U-value of less than 1.5 W/(m²K), preferably less than 1.2 W/(m²K).

8. The unit (1) according to any preceding claim, wherein the at least one gap (5) is sealed.

9. The unit (1) according to any preceding claim, wherein the at least one gap (5) has a thickness of at least 10 mm, but at most 20 mm.

10. The unit (1) according to any preceding claim, wherein each of the at least two coated glass panes (3) has a glass thickness of at least 5 mm, but at most 7 mm.

11. The unit (1) according to any preceding claim, wherein the unit (1) comprises two coated glass panes (3) separated by one gap (5).

12. The unit (1) according to any of claims 1 to 10, wherein the unit (1) comprises three coated glass panes (3) separated by two gaps (5), wherein the three coated glass panes (3) each comprise a low-emissivity and/or solar control coating (4) on a first major surface of the pane (3) and an anti-reflection coating (2) on a second major surface of the pane (3), wherein each of said low-emissivity and/or solar control coatings (4) is such that, if said coating (4) coats a major surface of an otherwise uncoated clear glass pane, said pane exhibits a visible light reflectance, both when viewed normal to said coated major surface and normal to an opposing uncoated major surface, of less than 6%.

13. The unit (1) according to any preceding claim, wherein at least one of the low-emissivity and/or solar control coatings (4) comprises at least the following layers in sequence:
- a lower anti-reflection layer, comprising in sequence from the first major surface of the pane
o a base dielectric layer, and
o a growth layer;
- a silver-based functional layer; and
- an upper anti-reflection layer, comprising in sequence from the silver-based functional layer,
o a barrier layer, and
o a top dielectric layer.

14. The unit (1) according to claim 14, wherein the base dielectric layer comprises TiO₂ and has a thickness of at least 20 nm, but at most 35 nm.

15. Use of an insulated multiple glazing unit (1) according to any of claims 1 to 14 in retail storefronts and/or showrooms.

## Patentansprüche

1. Isolierte Mehrfachverglasungseinheit (1), die mindestens zwei beschichtete Glasscheiben (3) umfasst, die durch mindestens einen Zwischenraum (5) voneinander getrennt sind,
wobei jede der mindestens zwei beschichteten Glasscheiben (3) eine Beschichtung (4) mit geringem Emissionsgrad und/oder mit Sonnenschutzfunktion auf einer ersten Hauptfläche der Scheibe und eine Antireflexionsbeschichtung (2) auf einer zweiten Hauptfläche der Scheibe umfasst,
wobei zwei der beschichteten Glasscheiben (3) Außenscheiben sind, die so angeordnet sind, dass ihre Beschichtungen (4) mit geringem Emissionsgrad und/oder mit Sonnenschutzfunktion einander gegenüberliegen und ihre Antireflexionsbeschichtungen voneinander weg weisen,
wobei jede der Beschichtungen (4) mit geringem Emissionsgrad und/oder mit Sonnenschutzfunktion so ist, dass, falls die Beschichtung (4) eine Hauptfläche der ansonsten nicht beschichteten klaren Glasscheibe beschichtet, diese Scheibe eine Reflexion für sichtbares Licht, sowohl wenn senkrecht zu der beschichteten Hauptfläche als auch wenn senkrecht zu einer gegenüberliegenden nicht beschichteten Hauptfläche betrachtet, von weniger als 6 % zeigt, und
wobei die Einheit (1) eine Reflexion für sichtbares Licht, wenn senkrecht zu jeder der Antireflexionsbeschichtungen (2) der beiden Außenschieben betrachtet, von weniger als 6 % zeigt.

2. Einheit (1) nach Anspruch 1, wobei jede der Beschichtungen (4) mit geringem Emissionsgrad und/oder mit Sonnenschutzfunktion so ist, dass, falls die Beschichtung (4) eine Hauptfläche einer ansonsten nicht beschichteten klaren Glasscheibe beschichtet, diese Scheibe eine Reflexion für sichtbares Licht, sowohl wenn senkrecht zu der beschichteten Hauptfläche als auch wenn senkrecht zu einer gegenüberliegenden nicht beschichteten Hauptfläche betrachtet, von weniger als 5 % zeigt.

3. Einheit (1) nach Anspruch 1 oder Anspruch 2, wobei jede der Beschichtungen (4) mit geringem Emissionsgrad und/oder mit Sonnenschutzfunktion so ist, dass, falls die Beschichtung (4) eine Hauptfläche einer ansonsten nicht beschichteten klaren Glasscheibe beschichtet, diese Scheibe eine Reflexion für sichtbares Licht, sowohl wenn senkrecht zu der beschichteten Hauptfläche als auch wenn senkrecht zu einer gegenüberliegenden nicht beschichteten Hauptfläche betrachtet, von weniger als 3 % zeigt.

4. Einheit (1) nach einem der vorhergehenden Ansprüche, wobei jede der Beschichtungen (4) mit geringem Emissionsgrad und/oder mit Sonnenschutzfunktion so ist, dass, falls die Beschichtung (4) eine Hauptfläche einer ansonsten nicht beschichteten klaren Glasscheibe beschichtet, die Reflexion für sichtbares Licht, die diese Scheibe zeigt, um nicht mehr als 0,5 % abweicht, wenn senkrecht zu der beschichteten Hauptfläche und senkrecht zu einer gegenüberliegenden nicht beschichteten Hauptfläche betrachtet.

5. Einheit (1) nach einem vorhergehenden Anspruch, wobei die Einheit (1) eine Reflexion für sichtbares Licht, wenn senkrecht zu jeder der Antireflexionsbeschichtungen (2) der beiden Außenscheiben (3) betrachtet, von weniger als 4 % zeigt.

6. Einheit (1) nach einem der vorhergehenden Ansprüche, wobei die Einheit (1) eine Reflexion für sichtbares Licht, wenn senkrecht zu jeder der Antireflexionsbeschichtungen (2) der beiden Außenscheiben (3) betrachtet, von weniger als 3,5 % zeigt.

7. Einheit (1) nach einem vorhergehenden Anspruch, wobei die Einheit (1) einen U-Wert von weniger als 1,5 W/(m²K), vorzugsweise weniger als 1,2 W/(m²K), zeigt.

8. Einheit (1) nach einem vorhergehenden Anspruch, wobei der mindestens eine Zwischenraum (5) abgedichtet ist.

9. Einheit (1) nach einem vorhergehenden Anspruch, wobei der mindestens eine Zwischenraum (5) eine Dicke von mindestens 10 mm und höchstens 20 mm aufweist.

10. Einheit (1) nach einem vorhergehenden Anspruch, wobei jede der mindestens zwei beschichteten Glasscheiben (3) eine Glasdicke von mindestens 5 mm und höchstens 7 mm aufweist.

11. Einheit (1) nach einem vorhergehenden Anspruch, wobei die Einheit (1) zwei beschichtete Glasscheiben (3) umfasst, die durch einen Zwischenraum (5) voneinander getrennt sind.

12. Einheit (1) nach einem der Ansprüche 1 bis 10, wobei die Einheit (1) drei beschichtete Glasscheiben (3) umfasst, die durch zwei Zwischenräume (5) voneinander getrennt sind, wobei jede der drei beschichteten Glasscheiben (3) eine Beschichtung (4) mit geringem Emissionsgrad und/oder mit Sonnenschutzfunktion auf einer ersten Hauptfläche der Scheibe (3) und eine Antireflexionsbeschichtung (2) auf einer zweiten Hauptfläche der Scheibe (3) umfasst, wobei jede der Beschichtungen (4) mit geringem Emissionsgrad und/oder mit Sonnenschutzfunktion so ist, dass, falls die Beschichtung (4) eine Hauptfläche einer ansonsten nicht beschichteten klaren Glasscheibe beschichtet, diese Scheibe eine Reflexion für sichtbares Licht, sowohl wenn senkrecht zu der beschichteten Hauptfläche als auch wenn senkrecht zu einer gegenüberliegenden nicht beschichteten Hauptfläche betrachtet, von weniger als 6 % zeigt.

13. Einheit (1) nach einem vorherigen Anspruch, wobei mindestens eine der Beschichtungen (4) mit geringem Emissionsgrad und/oder mit Sonnenschutzfunktion mindestens die folgenden Schichten der Reihe nach umfasst:
- eine untere Antireflexionsschicht, die der Reihe nach ab der ersten Hauptfläche der Scheibe umfasst:
o eine dielektrische Basisschicht, und
o eine Wachstumsschicht;
- eine Funktionsschicht auf Silberbasis; und
- eine obere Antireflexionsschicht, die der Reihe nach ab der Funktionsschicht auf Silberbasis umfasst:
o eine Barriereschicht, und
o eine dielektrische Deckschicht.

14. Einheit (1) nach Anspruch 14, wobei die dielektrische Basisschicht TiO₂ umfasst und eine Dicke von mindestens 20 nm und höchstens 35 nm aufweist.

15. Verwendung einer isolierten Mehrfachverglasungseinheit (1) nach einem der Ansprüche 1 bis 14 für Schaufensterfronten von Ladengeschäften und/oder Ausstellungsräume.

## Revendications

1. Unité à vitrage multiple isolé (1) comprenant au moins deux vitres revêtues (3) séparées par au moins un espace (5),
dans laquelle les au moins deux vitres revêtues (3) comprennent chacune un revêtement à faible émissivité et/ou de protection solaire (4) sur une première surface principale de la vitre et un revêtement antireflet (2) sur une seconde surface principale de la vitre,
dans laquelle deux des vitres revêtues (3) sont des vitres extérieures agencées de sorte que leurs revêtements à faible émissivité et/ou de protection solaire (4) sont orientés l'un face à l'autre et que leurs revêtements antireflet (2) sont orientés à l'opposé l'un de l'autre,
dans laquelle chacun desdits revêtements à faible émissivité et/ou de protection solaire (4) est tel que si ledit revêtement (4) recouvre une surface principale d'une vitre transparente autrement non revêtue, ladite vitre présente une réflectance de la lumière visible, vue perpendiculairement à ladite surface principale revêtue et perpendiculairement à une surface principale opposée non revêtue, de moins de 6 %, et
dans laquelle l'unité (1) présente une réflectance de la lumière visible, vue perpendiculairement à chacun desdits revêtements antireflet (2) des deux vitres extérieures, de moins de 6 %.

2. Unité (1) selon la revendication 1, dans laquelle chacun desdits revêtements à faible émissivité et/ou de protection solaire (4) est tel que si ledit revêtement (4) recouvre une surface principale d'une vitre transparente autrement non revêtue, ladite vitre présente une réflectance de la lumière visible, vue perpendiculairement à ladite surface principale revêtue et perpendiculairement à une surface principale opposée non revêtue, de moins de 5 %.

3. Unité (1) selon la revendication 1 ou la revendication 2, dans laquelle chacun desdits revêtements à faible émissivité et/ou de protection solaire (4) est tel que si ledit revêtement (4) recouvre une surface principale d'une vitre transparente autrement non revêtue, ladite vitre présente une réflectance de la lumière visible, vue perpendiculairement à ladite surface principale revêtue et perpendiculairement à une surface principale opposée non revêtue, de moins de 3 %.

4. Unité (1) selon l'une quelconque des revendications précédentes, dans laquelle chacun desdits revêtements à faible émissivité et/ou de protection solaire (4) est tel que si ledit revêtement (4) recouvre une surface principale d'une vitre transparente autrement non revêtue, la réflectance de la lumière visible que présente ladite vitre ne diffère pas de plus de 0,5 % vue perpendiculairement à ladite surface principale revêtue et perpendiculairement à une surface principale opposée non revêtue.

5. Unité (1) selon l'une quelconque des revendications précédentes, dans laquelle l'unité (1) présente une réflectance de la lumière visible, vue perpendiculairement à chacun desdits revêtements antireflet (2) des deux vitres extérieures (3), de moins de 4 %.

6. Unité (1) selon l'une quelconque des revendications précédentes, dans laquelle l'unité (1) présente une réflectance de la lumière visible, vue perpendiculairement à chacun desdits revêtements antireflet (2) des deux vitres extérieures (3), de moins de 3,5 %.

7. Unité (1) selon l'une quelconque des revendications précédentes, dans laquelle l'unité (1) présente une valeur U de moins de 1,5 W/(m²K) et de préférence, de moins de 1,2 W/(m²K).

8. Unité (1) selon l'une quelconque des revendications précédentes, dans laquelle l'au moins un espace (5) est étanche.

9. Unité (1) selon l'une quelconque des revendications précédentes, dans laquelle l'au moins un espace (5) a une épaisseur d'au moins 10 mm mais d'au plus 20 mm.

10. Unité (1) selon l'une quelconque des revendications précédentes, dans laquelle chacune des au moins deux vitres revêtues (3) a une épaisseur de verre d'au moins 5 mm mais d'au plus 7 mm.

11. Unité (1) selon l'une quelconque des revendications précédentes, dans laquelle l'unité (1) comprend deux vitres revêtues (3) séparées par un espace (5).

12. Unité (1) selon l'une quelconque des revendications 1 à 10, dans laquelle l'unité (1) comprend trois vitres revêtues (3) séparées par deux espaces (5), dans laquelle les trois vitres revêtues (3) comprennent chacune un revêtement à faible émissivité et/ou de protection solaire (4) sur une première surface principale de la vitre (3) et un revêtement antireflet (2) sur une seconde surface principale de la vitre (3), dans laquelle chacun desdits revêtements à faible émissivité et/ou de protection solaire (4) est tel que si ledit revêtement (4) recouvre une surface principale d'une vitre transparente autrement non revêtue, ladite vitre présente une réflectance de la lumière visible, vue perpendiculairement à ladite surface principale revêtue et perpendiculairement à une surface principale opposée non revêtue, de moins de 6 %.

13. Unité (1) selon l'une quelconque des revendications précédentes, dans laquelle au moins un des revêtements à faible émissivité et/ou de protection solaire (4) comprend au moins les couches suivantes, dans l'ordre :
- une couche antireflet inférieure, comprenant dans l'ordre, à partir de la première surface principale de la vitre
- une couche diélectrique de base et
- une couche de croissance ;
- une couche fonctionnelle à base d'argent ; et
- une couche antireflet supérieure, comprenant dans l'ordre, à partir de la couche fonctionnelle à base d'argent
- une couche barrière et
- une couche diélectrique supérieure.

14. Unité (1) selon la revendication 13, dans laquelle la couche diélectrique de base comprend du TiO₂ et a une épaisseur d'au moins 20 nm mais d'au plus 35 nm.

15. Utilisation d'une unité à vitrage multiple isolé (1) selon l'une quelconque des revendications 1 à 14 dans des vitrines ou des espaces d'exposition de magasins de vente au détail.
